# EUROPEAN PATENT SPECIFICATION

(11) **EP 1 875 532 B1**
(45) Date of publication and mention of the grant of the patent: **10.06.2009**
(21) Application number: 06757410.3
(22) Date of filing: 10.04.2006
(51) Int. Cl.: H01M 2/10

(54) **SECONDARY BATTERY CONTAINING LOOP ANTENNA PATTERNED ON PCB**
EINE AUF EINER PCB STRUKTURIERTE SCHLEIFENANTENNE ENTHALTENDE SEKUNDÄRBATTERIE
ACCUMULATEUR COMPRENANT UNE ANTENNE CADRE MONTEE SUR UNE CARTE DE CIRCUITS IMPRIMES

(30) Priority: 20.04.2005 KR 20050032932
(43) Date of publication of application: 09.01.2008
(73) Proprietor: LG Chem, Ltd., Youngdungpo-gu, Seoul 150-721 (KR)
(72) Inventor: MOON, Ki eob, Seoul 121-805 (KR); LEE, Cheol Woong, Seoul 130-860 (KR); YOON, Seogjin, Seoul 151-827 (KR); LEE, JH, Yongin-si, Gyeonggi-do 449-906 (KR)
(74) Representative: HOFFMANN EITLE
(86) International application number: PCT/KR2006/001290
(87) International publication number: WO 2006/112627

(56) References cited:
- EP-A- 1 465 279
- KR-A- 2002 028 642
- US-A- 5 147 985
- US-A1- 2005 122 667
- US-B2- 6 630 815

## Description

### FIELD OF THE INVENTION

The present invention relates to a secondary battery having a loop antenna patterned on a protection circuit board, and, more particularly, to a secondary battery wherein a loop antenna is patterned on a printed circuit board (PCB) for a protection circuit, electrically mounted or attached to a battery cell, whereby signal interference between the secondary battery and a device, in which the secondary battery is mounted, can be minimized, the manufacturing costs of the secondary battery can be greatly reduced, and the secondary battery can be manufactured with a thinner and lighter structure.

### BACKGROUND OF THE INVENTION

Generally, a secondary battery comprises a battery cell and a protection circuit module (PCM). The battery cell includes an electrode assembly, which has cathode plates, anode plates, and separators, and a case for receiving the electrode assembly, the case having a predetermined amount of electrolyte filled therein. The PCM includes a printed circuit board (PCB) mounted or attached to the outside of the battery cell, the PCB having a protection circuit electrically connected to electrode terminals of the battery cell, connecting terminals for electrically connecting the protection circuit board to the battery cell, and external input and output terminals provided at the opposite side of the protection circuit board such that the external input and output terminals are connected to an external device (for example, a wireless terminal, a laptop computer, or an electric vehicle).

Secondary batteries mounted to external devices, such as mobile phones, are classified into two types of secondary batteries based on the outward appearance of the secondary batteries when the secondary batteries are finally applied to the external devices. Specifically, the secondary batteries are classified into a hard pack-type secondary battery wherein a housing, which is made of a plastic resin, is integrally formed at the outer surface of the battery while terminals to be electrically connected to the corresponding external device are exposed to the outside ("external terminals") and an inner pack-type secondary battery wherein a housing, which is made of a plastic resin, is not formed at the outer surface of the battery while terminals to be electrically connected to the corresponding external device are exposed to the outside. The outer surface of the hard pack-type secondary battery is partially exposed to the outside in the state that the hard pack-type secondary battery is mounted to the corresponding external device. For this reason, the housing at the exposed outer surface of the hard pack-type secondary battery is made of the same material as a housing of the external device. Consequently, the hard pack-type secondary battery has an advantage in that the secondary battery can be easily and conveniently mounted to the corresponding external device; however, the hard pack-type secondary battery has a problem in that it is necessary to manufacture the housing of the secondary battery based on the shape and structure of the corresponding external device. For the inner pack-type secondary battery, on the other hand, an additional outer case is attached to the inner pack-type secondary battery in the state that the inner pack-type secondary battery is mounted in the corresponding external device. Consequently, the inner pack-type secondary battery has a problem in that the mounting process of the inner pack-type secondary battery is troublesome as compared to the hard pack-type secondary battery; however, the inner pack-type secondary battery has an advantage in that the inner pack-type secondary battery can be used irrespective of the shape and structure of the corresponding external device. For this reason, standardization of the secondary battery into the inner pack-type secondary battery, which can be used irrespective of the shape and structure of the corresponding external device, has progressed recently.

Also, a mobile electronic commercial transaction system and an identification system, which use radio frequency (RF), have rapidly grown with the progress of an information processing technology. As a result, the use of smart cards having an electronic chip for the mobile electronic commercial transaction system and the identification system mounted therein has also been increased. Furthermore, such systems have been embodied in wireless communication terminals, such as a mobile phone or a personal digital assistance (PDA), and it is expected that the demands for the above-described systems will be further increased.

The general construction of the wireless terminal, in which the above-described systems are embodied, is as follows. A loop antenna for transmitting and receiving radio frequency identification (RFID) signals is mounted in an upper case of the wireless terminal, and an electronic chip for processing the signals transmitted from and received to the loop antenna is mounted in a terminal body of the wireless terminal. According to this construction, however, the inside shape of the upper case is complicated, whereby the assembly of the wireless terminals is not easy. As a result, the number of defective products is increased. Also, the performance deviation is significant depending upon kinds of the loop antennas. The lengthy wire of the loop antenna causes a flexible printed circuit board (FPCB) or liquid crystal display (LCD) signal to have noise. Consequently, a method of mounting such a loop antenna to a detachable battery, which is used as a power source of the wireless terminal, has been proposed.

However, the size, especially, the thickness, and the weight of external devices, such as wireless terminals, have been decreased, and therefore, the assembly process of the battery, which is mounted to the wireless terminal, is time-consuming and needs to be performed with high precision. Consequently, the process of mounting the loop antenna to the battery comprises a plurality of more complicated multiple steps. Furthermore, this problem is very serious in the structure of the above-described inner pack-type secondary battery since it is necessary to mount almost all of the components of the battery, as a cap assembly, on the battery cell.

Several methods of locating a protection circuit board, connecting terminals, and a safety element, such as a positive temperature coefficient (PTC) element, in a molding apparatus together with a battery cell to mold the cap assembly as a single body have been proposed. In these conventional methods, however, the possibility of short circuits of the cap assembly due to the contact between the cap assembly and the molding apparatus is high, excessive pressure may be applied to the battery cell during the molding process, which causes the deformation of the battery cell, and the possibility of explosion of the battery is high in the high-temperature condition required for molding. Furthermore, the above-described conventional manufacturing methods have a problem in that the mounting process of the loop antenna cannot be easily carried out.

For this reason, the prevent inventors have developed a secondary battery, which is manufactured by inserting only a protection circuit module including a protection circuit board 10 and a loop antenna 20 into a molding apparatus, injecting molten resin into the molding apparatus to prepare an injected mold 30, and coupling the injected mold 30 to a battery cell (not shown), as shown in FIGS. 1 and 2, which is disclosed in Korean Patent Application No. 2004-106712.

In the above-described secondary battery, only the protection circuit module and the loop antenna are formed by insert injection molding in the state that the protection circuit is not connected to the battery, i.e., in the state that no voltage is applied to the protection circuit. Consequently, the molding process can be carried out using normal resins, the secondary battery is electrically stable, a coating process for preventing the occurrence of short circuits is not necessary, and there is no possibility of the electrical damage to the protection circuit. Furthermore, the above-described mold allows the manufacturing process of the secondary battery to be simplified although the loop antenna is mounted to the secondary battery. Preferably, the above-described mold is used, especially, in manufacturing the inner pack-type secondary battery.

### SUMMARY OF THE INVENTION

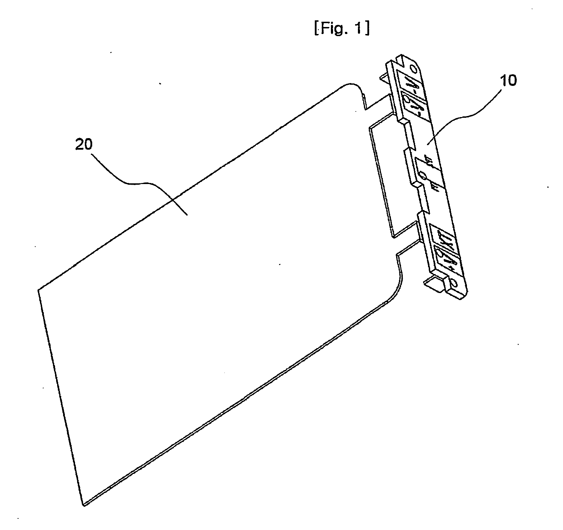

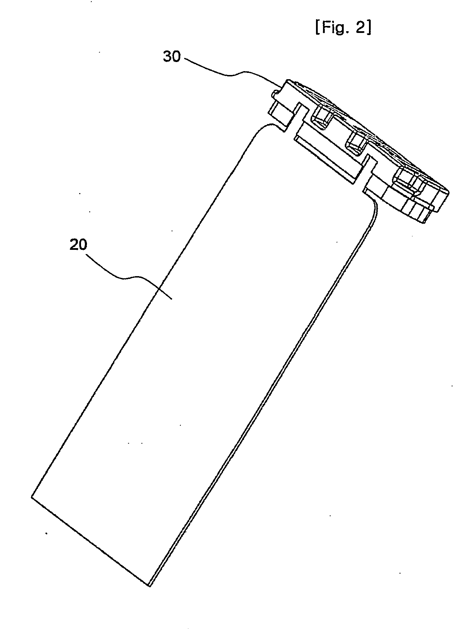

Furthermore, the present inventors have developed a novel-structure secondary battery having an antenna for transmitting and receiving desired radio frequency mounted therein instead of using the expensive loop antenna as shown in FIGS. 1 and 2.

The secondary battery according to the present invention is characterized in that a loop antenna is patterned on a protection circuit board, which is mounted or attached to a battery cell such that the protection circuit board can be electrically connected to the battery cell, for transmitting and receiving radio frequency signals.

The battery cell is a principal component of the battery, in which an electrode assembly including cathodes, anodes, and separators interposed between the cathodes and the anodes in a wound or stacked state is mounted together with an electrolyte in an aluminum or stainless steel case or in an aluminum laminate insulating pouch case in a sealed state. The cathodes and the anodes may be made of various active materials that allow continuous charge and discharge. The materials for the cathodes and the anodes are well known in the technical art to which the present invention pertains.

The protection circuit board means a PCB having a circuit for preventing the overcharge, overdischarge, and overcurrent of the battery (i.e., a protection circuit) printed on a plate-shaped epoxy-based synthetic resin. The protection circuit board is mounted to the upper end of the battery cell, or is attached to the side or the lower end of the battery cell such that the protection circuit board can be electrically connected to the battery cell. According to circumstances, a safety element may be disposed on the PCB or between the electrode assembly and the PCB in an electrically connected state for more safely protecting the battery from overcurrent, overcharge, or overdischarge. As the safety element, a fuse, a bimetal, or a positive temperature coefficient (PTC) element may be used. When the temperature exceeds a predetermined temperature, the PTC element rapidly interrupts the flow of electric current, and, when the temperature falls below the predetermined temperature, the PTC element rapidly resumes the flow of electric current. Also, when the PTC element is used, it is possible to reduce the size of the battery. Accordingly, the PTC element is preferable and most commonly used.

The present invention is characterized in that the loop antenna is patterned on the protection circuit board as the protection circuit. Consequently, no additional space for the installation of the loop antenna is necessary. Also, it is not necessary to use the expensive outer-type loop antenna as shown in FIG. 1, and therefore, the manufacturing costs of the secondary battery can be greatly reduced.

Several conventional technologies to mount an antenna for transmitting and receiving a high-frequency band of electromagnetic waves to a PCB in a device (a wireless terminal) in a specific shape, for example, in the shape of a reverse F and in the shape of an electron coupling printed slot microstrip have been disclosed. This kind of antenna is an antenna for transmitting and receiving electromagnetic waves having several hundred megahertz to several gigahertz between the corresponding device and a relay station; however, this antenna is not suitable to transmit and receive a radio frequency for local communication, such as electronic commercial transaction and identification (ID) in terms of the size and the shape thereof. As in the above-described conventional technologies, it may be considered to pattern the loop antenna for transmitting and receiving the radio frequency on the PCB in the corresponding device. However, the above-described device, such as a wireless terminal, is generally provided at the outer surface thereof with an electromagnetic wave interrupting unit, by which the safety of a user is guaranteed. In this construction, noise of a RF signal is large, the rate of error occurrence is increased, or noise is generated in a flexible printed circuit board (FPCB) or liquid crystal display (LCD) signal of the corresponding device.

Consequently, the technology for patterning the antenna, which transmits and receives the radio frequency, on the protection circuit board of the secondary battery according to the present invention is novel, and this technology provides the above-mentioned remarkable effects as such.

The loop antenna according to the present invention may be formed at an arbitrary position on the upper end surface or the lower end surface of the protection circuit board. Also, the loop antenna may be formed entirely or partially on the upper end surface or the lower end surface of the protection circuit board. Preferably, the loop antenna may be located on an insulation coating layer formed by performing an insulation coating with respect to a region spaced a predetermined distance from a protection circuit on the protection circuit board or with respect to the protection circuit, whereby interference between the loop antenna and the protection circuit is minimized.

The present invention may be applied to various kinds of secondary battery. Preferably, the present invention may be applied to an inner pack-type secondary battery, especially, an inner pack-type secondary battery having a cap assembly formed by insert injection molding.

The cap assembly means components of the battery mounted on the electrode assembly, including a protection circuit module having the protection circuit board, a cap housing that covers the outer surface of the protection circuit module, and leads for selective electrical connection.

The details of the insert injection molding method and the inner pack-type-secondary battery manufactured by the insert injection molding method are disclosed in PCT International Patent Application No. PCT/KR2004/2882, which has been filed in the name of the applicant of the present patent application. The disclosure of the above-mentioned international patent application is hereby incorporated by reference as if fully set forth herein.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view illustrating a loop antenna coupled to a printed circuit board (PCB) of a secondary battery disclosed in Korean Patent Application No. 2004-106712, which has been filed in the name of the applicant of the present patent application;
FIG. 2 is a perspective view illustrating a cap assembly mold having the loop antenna shown in FIG. 1 mounted thereto by insert injection molding;
FIG. 3 is a perspective view illustrating a loop antenna partially patterned on one side surface of a PCB according to a preferred embodiment of the present invention;
FIG. 4 is a perspective view illustrating a loop antenna entirely patterned on one side surface of a PCB according to another preferred embodiment of the present invention;
FIG. 5 is an exploded perspective view of a battery cell before a cap assembly mold is manufactured by insert injection molding according to a preferred embodiment of the present invention; and
FIG. 6 is a perspective view illustrating a cap assembly, which is manufactured by insert injection molding, coupled to the battery cell shown in FIG. 5.

### <Description of Main Reference Numerals of the Drawings>

| | |
|---|---|
| 100: protection circuit board | 120: loop antenna |
| 200: secondary battery | 300: battery cell |
| 400: protection circuit module | 500: lower cap |
| 600: cap assembly mold | 700: packing member |

### DETAILED DESCRIPTION OF PREFERRED EMBODIMENTS

Now, preferred embodiments of the present invention will be described in detail with reference to the accompanying drawings. It should be noted, however, that the scope of the present invention is not limited by the illustrated embodiments.

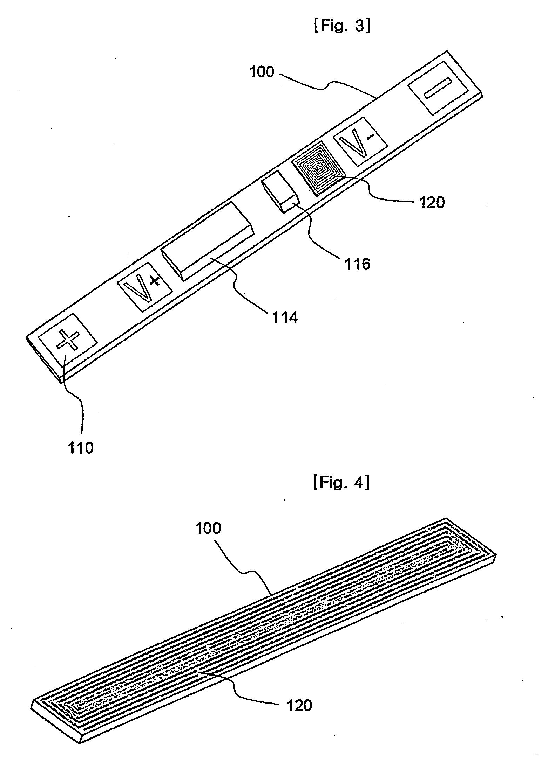

FIGS. 3 and 4 are perspective views typically illustrating a loop antenna partially and entirely patterned on one side surface of a protection circuit board (PCB) according to preferred embodiments of the present invention, respectively.

Referring to these drawings, external input and output terminals 110 and 112 are formed at the upper end of a plate-shaped protection circuit board 100. A protection circuit (not shown) for controlling overcharge, overdischarge, and overcurrent is printed on the upper end of the plate-shaped protection circuit board 100. Various safety elements 114 and 116 are mounted to the upper end of the plate-shaped protection circuit board 100. Also, a loop antenna 120 is patterned partially or entirely on the upper end surface or the lower end surface of the protection circuit board 100. The loop antenna 120 may be printed simultaneously when the protection circuit is printed on the protection circuit board 100, before the protection circuit is printed on the protection circuit board 100, or after the protection circuit is printed on the protection circuit board 100. Since the loop antenna 120 is patterned on the protection circuit board 100, no additional space for the installation of the loop antenna 120 is necessary.

The protection circuit board 100 having the above-described construction is electrically mounted or attached to a battery cell for secondary batteries having various structures.

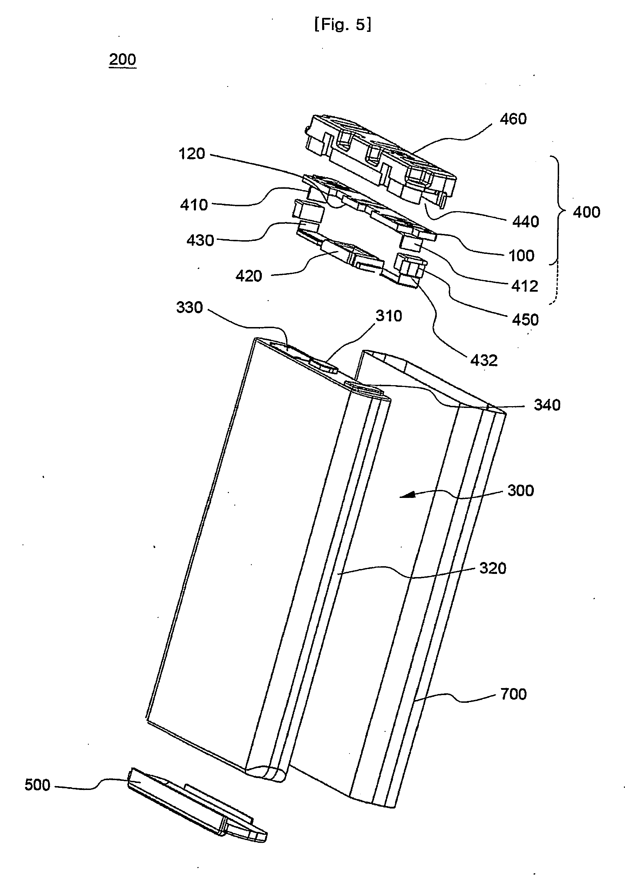

FIG. 5 is an exploded perspective view of an inner pack-type secondary battery according to a preferred embodiment of the present invention, to which the protection circuit board having the loop antenna patterned thereon as shown in FIG. 3 or 4 is applied.

Referring to FIG. 5, the inner pack-type secondary battery 200 comprises: a battery cell 300 having an electrode assembly (not shown), which includes cathodes, anodes, and separators, mounted together with an electrolyte therein; and a protection circuit module 400, which includes a protection circuit board 100 having a loop antenna 120 patterned on the lower end surface thereof, a connecting terminal 410, and a positive temperature coefficient (PTC) block 420. The loop antenna 120 is electrically connected to the protection circuit module 400 through an arbitrary circuit on the protection circuit board 100.

One electrode (for example, the anode) of the electrode assembly mounted in a sealed state into the battery cell 300 is connected to a middle projection terminal 310, and the other electrode (for example, the cathode) of the electrode assembly is directly connected to a conductive aluminum case 320 such that the case 320 itself serves as a terminal.

This embodiment is characterized in that the protection circuit board 400 having the loop antenna 120 mounted thereto and a cap housing 460 are formed by insert injection molding, whereby a cap assembly is manufactured in a single body. Basically, the protection circuit module 400 includes the protection circuit board 100 having the protection circuit and the loop antenna 120 formed thereon and the connecting terminals 410 and 412. As occasion demands, the protection circuit module 400 may include the PTC block 420 and/or leads 430 and 432.

In the case that the PTC block 420 and the leads 430 and 432 are not included in the cap assembly mold, the manufacturing process is performed such that only the connecting terminals 410 and 412 and the protection circuit board 100 are located in a predetermined molding apparatus (not shown), and then molten resin is injected into the molding apparatus, whereby the connecting terminals 410 and 412 and the protection circuit board 100 are integrally formed with the cap housing 460.

The assembly process of the cap assembly mold and the battery cell 300 is performed as follows.

First, a conductive member 330 having high adhesive strength, for example nickel clad, attached to one side of the upper end of the battery cell 300, and an insulation member 340 is attached to the other side of the upper end of the battery cell 300. The lead 430 is coupled to the conductive member 330. Later, the lead 430, i.e., the cathode lead, is coupled to the cathode connecting terminal 410 of the protection circuit module 400. On the other hand, the PTC block 420 is coupled to the protruding anode terminal 310. The lead 432 is coupled to the connecting terminal of the PTC block 420. Later, the lead 432 is coupled to the anode connecting terminal 412 of the protection circuit module 400. The coupling between the conductive member 330 and the cathode lead 430 and the coupling between the PTC block 420 and the anode lead 432 are accomplished, preferably, by spot welding. The cap assembly mold constituted by the protection circuit board 100 and the cap housing 460, which are integrally formed as a single body, is mounted to the upper end of the battery having the leads 430 and 432 coupled thereto as described above in the state that portions of the connecting terminals 410 and 412 are exposed at the lower end of the battery.

After the cap assembly mold is mounted to the upper end of the battery as described above, the connecting terminal 412 and the lead 432 are coupled to each to each other, by welding, through an opening 440 formed in the side of the cap assembly mold, and then the opening 440 is sealed by a side cap 450. As a result, the upper part of the battery is formed. Subsequently, a lower cap 500 is fitted to the battery cell 300, and then the outer surface of the battery cell 300 is covered by a packing member 700. As a result, the inner pack-type secondary cell 100 is completed.

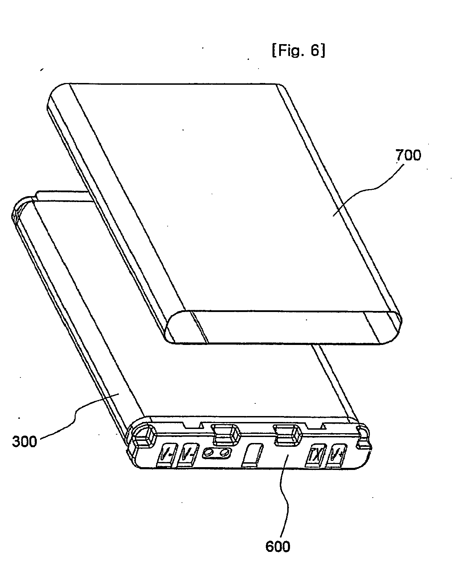

FIG. 6 is a perspective view illustrating the coupling state of the battery before the battery is covered by the packing member.

Referring to FIG. 6, the outer surface of the battery cell 300 is covered by the packing member 700 in the state that a cap assembly mold 600 is mounted to the upper end of the battery cell 300. As a result, an inner pack-type secondary cell is completed. As shown in FIG. 6, an insulating label is used as the packing member 700, although various members, for example a box-shaped member, may be used. Since the loop antenna is patterned on the protection circuit board as shown in the previous drawings, no additional space for the installation of the loop antenna is necessary.

Although the preferred embodiments of the present invention have been disclosed for illustrative purposes, those skilled in the art will appreciate that various modifications, additions and substitutions are possible, without departing from the scope of the invention as disclosed in the accompanying claims.

### INDUSTRIAL APPLICABILITY

As apparent from the above description, in the secondary battery according to the present invention, the loop antenna for transmitting and receiving radio frequency signals is patterned on the protection circuit board, which is mounted or attached to the battery cell. Consequently, the generation of noise in the flexible printed circuit board (FPCB) or liquid crystal display (LCD) signal of a device, in which the secondary battery is mounted, is effectively prevented, and interference due to the generated noise is greatly reduced. Furthermore, no additional space for the installation of the loop antenna is necessary, whereby the reduction in the size, especially, the thickness, and the weight of the secondary battery is accomplished. Also, the conventional expensive outer-type loop antenna is not used, and therefore, the manufacturing costs of the secondary battery can be greatly reduced. The secondary battery with the above-stated construction according to the present invention is preferably used for the inner pack-type secondary battery.

## Claims

1. A secondary battery having a loop antenna, wherein
the loop antenna is patterned on a protection circuit board, which is mounted or attached to a battery cell such that the protection circuit board can be electrically connected to the battery cell, for transmitting and receiving radio frequency signals.

2. The secondary battery according to claim 1, wherein the loop antenna is formed on the upper end surface or the lower end surface of the protection circuit board.

3. The secondary battery according to claim .2, wherein the loop antenna is formed entirely or partially on the upper end surface or the lower end surface of the protection circuit board.

4. The secondary battery according to claim 1, wherein the loop antenna is located on an insulation coating layer formed by performing an insulation coating with respect to a region spaced a predetermined distance from a protection circuit on the protection circuit board or with respect to the protection circuit.

5. The secondary battery according to claim 1, wherein the secondary battery is an inner pack-type secondary battery.

6. The secondary battery according to claim 5, wherein the secondary battery is an inner pack-type secondary battery having a cap assembly formed by insert injection molding.

## Patentansprüche

1. Sekundärbatterie mit einer Peilantenne, bei der
die Peilantenne auf einer Schutzschaltungsplatte gestaltet ist, die derart an einer Batteriezelle montiert oder angebracht ist, dass die Schutzschaltungsplatte elektrisch mit der Batteriezelle verbunden werden kann, um Funkfrequenzsignale zu übertragen und zu empfangen.

2. Sekundärbatterie nach Anspruch 1, wobei die Peilantenne auf der oberen Endoberfläche oder der unteren Endoberfläche der Schutzschaltungsplatte gebildet ist.

3. Sekundärbatterie nach Anspruch 2, wobei die Peilantenne vollständig oder teilweise auf der oberen Endoberfläche oder der unteren Endoberfläche der Schutzschaltungsplatte gebildet ist.

4. Sekundärbatterie nach Anspruch 1, wobei die Peilantenne auf einer Isolationsüberzugsschicht angeordnet ist, die durch Ausbilden einer Isolationsbeschichtung in Bezug auf einen Bereich, der um einen vorbestimmten Abstand von einer Schutzschaltung auf der Schutzschaltungsplatte oder in Bezug auf die Schutzschaltung beabstandet ist, gebildet ist.

5. Sekundärbatterie nach Anspruch 1, wobei die Sekundärbatterie eine Sekundärbatterie vom Innenpackungs-Typ ist.

6. Sekundärbatterie nach Anspruch 5, wobei die Sekundärbatterie eine Sekundärbatterie vom Innenpackungs-Typ mit einer Deckelanordnung ist, die durch Insert-Spritzgießen gebildet ist.

## Revendications

1. Batterie secondaire ayant une antenne en boucle, dans laquelle :
l'antenne en boucle est modelée sur une carte de circuit de protection, que l'on monte ou fixe à une cellule de batterie de telle sorte que la carte de circuit de protection puisse être électriquement reliée à la cellule de batterie, pour émettre et recevoir des signaux de radiofréquence.

2. Batterie secondaire selon la revendication 1, dans laquelle l'antenne en boucle est formée sur la surface d'extrémité supérieure ou la surface d'extrémité inférieure de la carte de circuit de protection.

3. Batterie secondaire selon la revendication 2, dans laquelle l'antenne en boucle est formée entièrement ou partiellement sur la surface d'extrémité supérieure ou la surface d'extrémité inférieure de la carte de circuit de protection.

4. Batterie secondaire selon la revendication 1, dans laquelle l'antenne en boucle est située sur une couche de revêtement d'isolation formée en réalisant un revêtement d'isolation par rapport à une région éloignée d'une distance prédéterminée d'un circuit de protection sur la carte de circuit de protection ou par rapport au circuit de protection.

5. Batterie secondaire selon la revendication 1, dans laquelle la batterie secondaire est une batterie secondaire de type bloc interne.

6. Batterie secondaire selon la revendication 5, dans laquelle la batterie secondaire est une batterie secondaire de type bloc interne ayant un ensemble capot formé par un moulage par injection avec insertion de préforme.
